# EUROPÄISCHE PATENTSCHRIFT

(11) **EP 1 154 243 B1**
(45) Veröffentlichungstag und Bekanntmachung des Hinweises auf die Patenterteilung: **20.12.2006**
(21) Anmeldenummer: 00110091.6
(22) Anmeldetag: 12.05.2000
(51) Int. Cl.: G01F 1/84, G01N 9/00

(54) **Coriolis Massendurchflussmesser mit zwei gebogenen Messrohren**
Coriolis mass flow measurement device with two curved measurement conduits
Débitmètre massique Coriolis avec deux tubes de mesure courbés

(43) Veröffentlichungstag der Anmeldung: 14.11.2001
(73) Patentinhaber: Endress + Hauser Flowtec AG, 4153 Reinach BL 1 (CH)
(72) Erfinder: Bitto, Ennio, 4147 Aesch (CH); Schütze, Christian, 4055 Basel (CH); Koudal, Ole, 5400 Baden (CH)
(74) Vertreter: Andres, Angelika Maria

(56) Entgegenhaltungen:
- EP-A- 0 553 939
- WO-A-00/57141
- WO-A-99/63309
- US-A- 4 781 069
- US-A- 5 796 011

## Beschreibung

Die Erfindung betrifft nach dem Coriolisprinzip arbeitende Massedurchfluß/Dichte/Viskositäts-Aufnehmer - im Folgenden kurz als Coriolis-Aufnehmer bezeichnet - mit zwei gebogenen Meßrohren.

Mit derartigen Coriolis-Aufnehmern, deren Meßrohre bekanntlich in Schwingungen, insb. in Biegeschwingungen mit oder ohne überlagerte Drehschwingungen, versetzt werden, kann nicht nur der momentane Massedurchfluss eines Fluids, das gerade in einer Rohrleitung strömt, gemessen werden, sondern es können immer auch die Dichte des Fluids aufgrund der momentanen Schwingfrequenz der Meßrohre und die Viskosität des Fluids aufgrund der zur Aufrechterhaltung von deren Schwingungen erforderlichen Leistung gemessen werden.

Da die Temperatur des Fluids im Betrieb nicht konstant ist und dessen Dichte bekanntlich temperatur-abhängig ist, ist der Coriolis-Aufnehmer üblicherweise auch mit mindestens einem Temperatursensor für die Messung der Temperatur des Fluids versehen. Der Coriolis-Aufnehmer wird für alle diese Messungen in die Rohrleitung eingesetzt und darin, z.B. mittels Flanschen, druckdicht und meist dauernd befestigt.

In der US-A 41 87 721 ist ein Coriolis-Massedurchfluß/Dichte-Aufnehmer beschrieben, der in eine von einem Fluid mindestens temporär durchströmte Rohrleitung einzusetzen ist,
- mit einem einzigen in einer Ebene U-förmig bezüglich einer Symmetrielinie symmetrisch gebogenen Meßrohr, das
   -- einstückig ausgebildet ist,
   -- ein in einem Tragwinkel fixiertes, gerades Einlaßstück und
   -- ein im Tragwinkel fixiertes, gerades Auslaßstück,
   -- ein mit dem Einlaßstück verbundenes gekröpftes Einlaß-Zwischenstück,
   -- ein mit dem Auslaßstück verbundenes gekröpftes Auslaß-Zwischenstück,
   -- ein mit dem Einlaß-Zwischenstück verbundenes erstes Bogenstück,
   -- ein mit dem Auslaß-Zwischenstück verbundenes zweites Bogenstück und
   -- ein das erste mit dem zweiten Bogenstück verbindendes, gerades Scheitelstück aufweist,
- mit einer Erregeranordnung,
   -- die das Meßrohr zusammen mit einem Erregerträger im Betrieb in gegenseitige stimmgabelartige Schwingungen versetzt,
   -- von der ein erster Teil am Scheitelstück im Bereich der Symmetrielinie fixiert ist und
   -- von der ein zweiter Teil am Erregerträger fixiert ist,
- mit einem ersten optischen Sensor,
   -- von dem ein erster Teil am Meßrohr dort fixiert ist,
      --- wo das Einlaß-Zwischenstück in das erste Bogenstück übergeht, und
   -- von dem ein zweiter Teil am Tragwinkel fixiert ist, und
- mit einem zweiten optischen Sensor,
   -- von dem ein erster Teil am Meßrohr dort fixiert ist,
      --- wo das Auslaß-Zwischenstück in das zweite Bogenstück übergeht, und
   -- von dem ein zweiter Teil am Tragwinkel fixiert ist.

In der JP-A 56 - 125 622 ist ein Coriolis-Massedurchfluß-Aufnehmer beschrieben, der in eine von einem Fluid mindestens temporär durchströmte Rohrleitung einzusetzen ist,
- mit einem in einer Ebene omega-förmig bezüglich einer Symmetrielinie symmetrisch gebogenen Meßrohr, das
   -- einstückig ausgebildet ist,
   -- ein gerades Einlaßstück mit einer in der Ebene liegenden Einlaßachse,
   -- ein gerades Auslaßstück mit einer mit der Einlaßachse fluchtenden Auslaßachse,
   -- einen mit dem Einlaßstück verbundenen S-förmigen Einlaßbogen,
   -- einen mit dem Auslaßstück verbundenen S-förmigen Auslaßbogen und
   -- einen den Einlaß- mit dem Auslaßbogen verbindenden Scheitelbogen aufweist,
- mit einer Erregeranordnung,
   -- die das Meßrohr zusammen mit einem Erregerträger im Betrieb in gegenseitige stimmgabelartige Schwingungen versetzt,
   -- von der ein erster Teil am Scheitelbogen im Bereich der Symmetrielinie fixiert ist und
   -- von der ein zweiter Teil am Erregerträger fixiert ist,
- mit einem stabförmigen Sensorträger, der
   -- senkrecht zur Symmetrielinie verläuft,
   -- von dem ein erstes Ende am Meßrohr dort fixiert ist, wo der Einlaßbogen in den Scheitelbogen übergeht, und
   -- von dem ein zweites Ende am Meßrohr dort fixiert ist, wo der Auslaßbogen in den Scheitelbogen übergeht, und
- mit einer auf dem Sensorträger angeordneten Dehnmeßstreifen-Brücke als Sensoranordnung.

In der US-A 41 27 028 ist ein Coriolis-Massedurchfluß-Aufnehmer beschrieben, der in eine von einem Fluid mindestens temporär durchströmte Rohrleitung einzusetzen ist,
- mit einem in einer ersten Ebene U-förmig bezüglich einer ersten Symmetrielinie symmetrisch gebogenen ersten Meßrohr,
- mit einem in einer zweiten Ebene U-förmig bezüglich einer zweiten Symmetrielinie symmetrisch gebogenen zweiten Meßrohr,
   -- welche Meßrohre parallel zu einander angeordnet, einstückig ausgebildet und strömungsmäßig in Serie geschaltet sind und
   -- von welchen Meßrohren jedes
      --- ein gerades Einlaßstück,
      --- ein gerades Auslaßstück,
      --- einen mit dem Einlaßstück verbundenen S-förmigen Einlaßbogen,
      --- einen mit dem Auslaßstück verbundenen S-förmigen Auslaßbogen,
      --- ein gerades, mit dem Einlaßbogen verbundenes erstes Rohrstück,
      --- ein gerades, mit dem Auslaßbogen verbundenes zweites Rohrstück und
      --- einen mit den Rohrstücken verbundenen Scheitel-Halbkreisbogen aufweist,
         ---- welche Einlaßstücke und welche Auslaßstücke durch einen Fixierblock geführt sind,
      --- wobei der Abstand von Einlaß- und Auslaßstück eines Meßrohrs kleiner ist als der Abstand von erstem und zweitem Rohrstück diese Meßrohrs,
- mit einer Erregeranordnung,
   -- die die Meßrohre im Betrieb in stimmgabelartige Schwingungen versetzt,
   -- von der ein erster Teil am Scheitel-Halbkreisbogen des ersten Meßrohrs im Bereich von dessen Symmetrielinie fixiert ist und
   -- von der ein zweiter Teil am Scheitel-Halbkreisbogen des zweiten Meßrohrs im Bereich von dessen Symmetrielinie fixiert ist, und
- mit einem ersten optischen Sensor,
   -- von dem ein erster Teil am ersten Meßrohr und ein zweiter Teil am zweiten Meßrohr dort fixiert sind,
      --- wo das jeweilige erste Rohrstück in den jeweiligen Scheitel-Halbkreisbogen übergeht, und
- mit einem zweiten optischen Sensor,
   -- von dem ein erster Teil am ersten Meßrohr und ein zweiter Teil am zweiten Meßrohr dort fixiert sind,
      --- wo das jeweilige zweite Rohrstück in den jeweiligen Scheitel-Halbkreisbogen übergeht.

In der US-A 46 22 858 ist ein Coriolis-Massedurchfluß-Aufnehmer beschrieben, der in eine von einem Fluid mindestens temporär durchströmte Rohrleitung einzusetzen ist,
- mit einem geraden ersten Meßrohr,
- mit einem geraden zweiten Meßrohr,
   -- welche Meßrohre parallel zu einander angeordnet sind,
   -- einstückig ausgebildet sind und
   -- mittels eines Einlaß- und eines Auslaß-Verteilerstücks strömungsmäßig parallelgeschaltet sind,
- mit einer Erregeranordnung,
   -- die die Meßrohre im Betrieb in stimmgabelartige Schwingungen versetzt,
   -- von der ein erster Teil am ersten Meßrohr in der Mitte zwischen Einlaß- und Auslaß-Verteilerstück fixiert ist und
   -- von der ein zweiter Teil am zweiten Meßrohr in der Mitte zwischen Einlaß- und Auslaß-Verteilerstück fixiert ist,
- mit einem ersten elektrodynamischen Sensor,
   -- von dem ein erster Teil am ersten Meßrohr und ein zweiter Teil am zweiten Meßrohr in der Mitte zwischen Schwingungserreger und Einlaß-Verteilerstück fixiert sind, und
- mit einem zweiten elektrodynamischen Sensor,
   -- von dem ein erster Teil am ersten Meßrohr und ein zweiter Teil am zweiten Meßrohr in der Mitte zwischen Schwingungserreger und Auslaß-Verteilerstück fixiert sind.

In der US-A 60 06 609 ist ein Coriolis-Massedurchfluß/Dichte/Viskositäts-Aufnehmer beschrieben, der in eine von einem Fluid mindestens temporär durchströmte Rohrleitung einzusetzen ist,
- mit einem einzigen, einstückigen geraden Meßrohr,
   -- das in seiner Mitte mit einer Auslegermasse versehen ist und
   -- von dem ein Einlaßende und ein Auslaßende von einem Tragrahmen gehaltert sind, der in einem Gehäuse angeordnet ist,
- mit einer Erregeranordnung,
   -- die das Meßrohr im Betrieb in Biege- und dazu gleichfrequente Drehschwingungen versetzt und
   -- von der erste Teile an der Auslegermasse und zweite Teile am Tragrahmen fixiert sind,
- mit einem ersten Sensor,
   -- von dem ein erster Teil am Meßrohr und ein zweiter Teil am Tragrahmen etwa in der Mitte zwischen Einlaßende und Auslegermasse fixiert sind, und
- mit einem zweiten Sensor,
   -- von dem ein erster Teil am Meßrohr und ein zweiter Teil am Tragrahmen etwa in der Mitte zwischen Auslaßende und Auslegermasse fixiert sind.

In der US-A 57 96 011, insb. in Verbindung mit Fig. 5, ist ein Coriolis-Massedurchfluß-Aufnehmer beschrieben, der in eine von einem Fluid mindestens temporär durchströmte Rohrleitung einzusetzen ist,
- mit einem in einer ersten Ebene bezüglich einer ersten Symmetrielinie symmetrisch gebogenen ersten Meßrohr,
- mit einem in einer zweiten Ebene bezüglich einer zweiten Symmetrielinie symmetrisch gebogenen zweiten Meßrohr,
   -- welche Meßrohre parallel zu einander angeordnet sowie einstückig ausgebildet und
   -- von welchen Meßrohren jedes
      --- ein gerades Einlaßstück mit einer in der ersten bzw. zweiten Ebene liegenden Einlaßachse,
      --- ein gerades Auslaßstück mit einer mit der Einlaßachse fluchtenden Auslaßachse,
      --- einen mit dem Einlaßstück verbundenen Einlaßbogen,
      --- einen mit dem Auslaßstück verbundenen Auslaßbogen und
      --- einen mit den Rohrstücken verbundenen Scheitel-Kreissegmentbogen minimaler Höhe aufweist,
         ---- welche Einlaßstücke und welche Auslaßstücke mittels eines Einlaß- und eines Auslaß-Verteilerstücks strömungsmäßig parallelgeschaltet sind und
         ---- welche Verteilerstücke von einem Tragrahmen gehaltert sind, der Teil eines Gehäuses ist,
- mit einer die beiden Meßrohre dort starr verbindenden ersten Knotenplatte,
   -- wo der Einlaßbogen in den Scheitel-Kreissegmentbogen übergeht,
- mit einer die beiden Meßrohre dort starr verbindenden zweiten Knotenplatte,
   -- wo der Auslaßbogen in den Scheitel-Kreissegmentbogen übergeht,
- mit einer Erregeranordnung,
   -- die die Meßrohre im Betrieb in stimmgabelartige Schwingungen versetzt,
   -- von der ein erster Teil am Scheitel-Kreissegmentbogen des ersten Meßrohrs im Bereich von dessen Symmetrielinie fixiert ist und
   -- von der ein zweiter Teil am Scheitel-Halbkreisbogen des zweiten Meßrohrs im Bereich von dessen Symmetrielinie fixiert ist, und
- mit einem ersten Sensor,
   -- von dem ein erster Teil am ersten Meßrohr und ein zweiter Teil am zweiten Meßrohr dort fixiert sind,
      --- wo der jeweilige Einlaßbogen in den jeweiligen Scheitel-Kreissegmentbogen übergeht,
- mit einem zweiten Sensor,
   -- von dem ein erster Teil am ersten Meßrohr und ein zweiter Teil am zweiten Meßrohr dort fixiert sind,
      --- wo der jeweilige Auslaßbogen in den jeweiligen Scheitel-Kreissegmentbogen übergeht,
- mit einer in den Tragrahmen gegenüber den Scheitel-Kreisegmentbögen eingesetzten, mehrere elektrische Leiter aufweisenden Durchführung und
- mit einer am Tragrahmen befestigten, zwischen Ein- und Auslaß-Verteilerstück verlaufenden Leiterplatte mit Leitbahnen,
   -- mittels denen Anschluß-Leitungen der Erregeranordnung und der Sensoren an die Leiter der Durchführung angeschlossen sind.

Den referierten Merkmalsensembles der einzelnen vorbeschriebenen Anordnungen ist noch hinzuzufügen, dass ein gerades Meßrohr bzw. gerade Meßrohre bevorzugt aus reinem Titan, einer Titan-Legierung mit hohem Titangehalt, reinem Zirconium oder einer Zirconium-Legierung mit hohem Zirconiumgehalt bestehen, da sich gegenüber Meßrohren aus rostfreiem Stahl, der bei geraden Meßrohren an sich möglich ist, kürzere Baulängen ergeben, und dass ein gebogenes Meßrohr bzw. gebogene Meßrohre bevorzugt aus rostfreiem Stahl bestehen, obwohl Titan oder Zirconium bzw. deren Legierungen auch hier als Material der Meßrohre möglich sind.

Das Konstruktionsprinzip des Coriolis-Massedurchfluß-Aufnehmers nach der US-A 57 96 011 läßt nur solche Scheitel-Kreissegmentbögen zu, die einen großen Krümmungsradius haben, bei denen also der Abstand zwischen Scheitel-Kreissegmentbogen und Einlaß-/Auslaßachse minimal in Abhängigkeit vom Innen-Durchmesser und von der Wandstärke der Meßrohre sowie von einer zulässigen temperaturbereich-bedingten mechanischen Spannung ist. Für Abstände zwischen Scheitel und Einlaß-/Auslaßachse jedoch, die größer sind als der minimale Abstand, insb. für Abstände, die um eine Größenordnung größer sind als die Größenordnung des minimalen Abstands, ist das Konstruktionsprinzip der US-A 57 96 011 ungeeignet.

Eine Aufgabe der Erfindung besteht daher darin, ausgehend von dem Konstruktionsprinzip der US-A 57 96 011, einen Coriolis-Massedurchfluß/Dichte/Viskositäts-Aufnehmer anzugeben, bei dem der Abstand zwischen dem Scheitel des Scheitelbogens und der Einlaß/Auslaßachse praktisch beliebig groß sein kann. Zugleich sollen möglichst exakte Meßergebnisse, z.B. in der Größenordnung von 0,5% vom Meßwert, erreichbar sein, die Herstellungskosten gegenüber den Herstellungskosten der vorbeschriebenen Massedurchfluß-Aufnehmer, Massedurchfluß/Dichte-Aufnehmer oder Massedurchfluß/Dichte/Viskositäts-Aufnehmer minimiert und eine gegenüber den vorbeschriebenen Anordnungen kürzere Einbaulänge ermöglicht werden.

Zur Lösung dieser Aufgaben besteht die Erfindung in einem Coriolis-Massedurchfluß/Dichte/Viskositäts-Aufnehmer, der in eine von einem Fluid mindestens temporär durchströmte Rohrleitung einzusetzen ist,
- mit einem in einer ersten Ebene V-förmig bezüglich einer ersten Symmetrielinie symmetrisch gebogenen ersten Meßrohr,
- mit einem in einer zweiten Ebene V-förmig bezüglich einer zweiten Symmetrielinie symmetrisch gebogenen zweiten Meßrohr,
   -- welche Meßrohre parallel zu einander angeordnet sowie jeweils einstückig ausgebildet sind und
   -- von welchen Meßrohren jedes
      --- ein gerades Einlaßstück mit einer in der ersten bzw. zweiten Ebene liegenden Einlaßachse,
      --- ein gerades Auslaßstück mit einer in der ersten bzw. zweiten Ebene liegenden und mit der Einlaßachse fluchtenden Auslaßachse,
      --- einen mit dem Einlaßstück verbundenen Einlaßbogen,
      --- einen mit dem Auslaßstück verbundenen Auslaßbogen,
      --- ein mit dem Einlaßbogen verbundenes erstes gerades Rohrstück,
      --- ein mit dem Auslaßbogen verbundenes zweites gerades Rohrstück und
      --- einen mit den Rohrstücken verbundenen Scheitelbogen aufweist,
         ---- welche Einlaßstücke in einem Einlaß-Verteilerstück fixiert sind,
         ---- welche Auslaßstücke in einem Auslaß-Verteilerstück fixiert sind und
         ---- welche Verteilerstücke von einem Tragrahmen gehaltert sind, der Teil eines Gehäuses ist,
- mit einer Erregeranordnung,
   -- die die Meßrohre im Betrieb in stimmgabel-artige Schwingungen versetzt,
   -- von der ein erster Teil am Scheitelbogen des ersten Meßrohrs im Bereich von dessen Symmetrielinie fixiert ist und
   -- von der ein zweiter Teil am Scheitelbogen des zweiten Meßrohrs im Bereich von dessen Symmetrielinie fixiert ist,
- mit einem ersten Geschwindigkeits- oder Wegsensor,
   -- von dem ein erster Teil am ersten Rohrstück des ersten Meßrohrs und ein zweiter Teil am ersten Rohrstück des zweiten Meßrohrs fixiert ist,
- mit einem symmetrisch bezüglich der Symmetrielinien der Meßrohre angeordneten zweiten Geschwindigkeits- oder Wegsensor,
   -- von dem ein erster Teil am zweiten Rohrstück des ersten Meßrohrs und ein zweiter Teil am zweiten Rohrstück des zweiten Meßrohrs fixiert ist,
- mit einer in den Tragrahmen gegenüber den Scheitelbögen eingesetzten, mehrere elektrische Leiter aufweisenden Durchführung und
- mit einer am Tragrahmen befestigten und zwischen diesem sowie den Scheitelbögen verlaufenden Leiterplatte mit Leitbahnen,
   -- an denen Anschluß-Leitungen der Erregeranordnung und der Geschwindigkeits- oder Wegsensoren angeschlossen sind.

Nach einer bevorzugten Weiterbildung der Erfindung sind die Meßrohre
- mittels einer ersten Knotenplatte in der Nähe einer Stelle starr miteinander verbunden,
   -- an der das jeweilige Einlaßstück in den jeweiligen Einlaßbogen übergeht,
- mittels einer zweiten Knotenplatte in der Nähe einer Stelle starr miteinander verbunden,
   -- an der der jeweilige Einlaßbogen in das jeweilige erste Rohrstück übergeht,
- mittels einer dritten Knotenplatte in der Nähe einer Stelle starr miteinander verbunden,
   -- an der das jeweilige Auslaßstück in den jeweiligen Auslaßbogen übergeht, und
- mittels einer vierten Knotenplatte in der Nähe einer Stelle starr miteinander verbunden,
   -- an der der jeweilige Auslaßbogen in das jeweilige zweite Rohrstück übergeht.

Nach einer ersten bevorzugten Ausgestaltung der Erfindung und/oder deren Weiterbildung sind elektrodynamische Geschwindigkeitssensoren verwendet und ist die Erregeranordnung vom elektrodynamischen Typ.

Nach einer zweiten bevorzugten Ausgestaltung der Erfindung, die auch bei deren Weiterbildung und/oder deren erster Ausgestaltung anwendbar ist,
- ist der Tragrahmen einstückig und besteht aus einem eine Vorderfläche und eine Hinterfläche aufweisenden rostfreien Stahlblech von konstanter Breite und Dicke und umfaßt:
   -- ein ebenes Einlaß-Rahmenstück, in dem das Einlaß-Verteilerstück verschweißt ist,
   -- ein ebenes Auslaß-Rahmenstück, in dem das Auslaß-Verteilerstück verschweißt ist,
   -- ein Einlaß- und Auslaß-Rahmenstück verbindendes, ebenes Durchführungs-Rahmenstück, in dem die Durchführung druckdicht fixiert ist,
   -- ein an das Einlaß-Rahmenstück unter einem Winkel angesetztes, ebenes erstes Ansatz-Rahmenstück, der größer als 90° ist,
   -- ein in das erste Ansatz-Rahmenstück übergehendes, gebogenes Scheitel-Rahmenstück und
   -- ein an das Auslaß-Rahmenstück unter dem Winkel angesetztes, in das Scheitel-Rahmenstück übergehendes, ebenes zweites Ansatzstück, und
- ist der Tragrahmen durch ein auf die Vorderfläche geschweißtes ebenes Vorderblech aus rostfreiem Stahl und ein auf die Hinterfläche geschweißtes ebenes Hinterblech aus demselben Stahl zum Gehäuse ergänzt.

Nach einer dritten bevorzugten Ausgestaltung der Erfindung, die auch bei deren Weiterbildung und/oder deren erster und/oder zweiten Ausgestaltung anwendbar ist, umfasst die Durchführung:
- einen am Tragrahmen befestigten, eine Bohrung aufweisenden Flansch
- die Leiterplatte, die durch einen im Durchführungs-Rahmenstück angebrachten Schlitz gesteckt ist und sich in den Flansch hinein erstreckt, wobei zwischen Leiterplatte und Schlitz ein zur elektrischen Isolierung ausreichender Abstand eingehalten ist,
- eine auf dem Durchführung-Rahmenstück bohrungsseitig aufliegende Scheibe aus einem Isoliermaterial, durch die Leiterplatte gesteckt ist, und
- eine einen oberhalb der Scheibe liegenden Teil der Bohrung ausfüllende isolierende Vergussmasse, von der eine Dicke mindestens gleich der Länge der für die Zündschutzart Ex-d vorgeschriebenen Spaltlänge in Abhängigkeit von der Spaltbreite ist.

Ein Vorteil der Erfindung besteht darin, dass sie Coriolis-Massedurchfluß/Dichte/Viskositäts-Aufnehmer ermöglicht, deren Baulänge, also die Länge entlang der Einlaß/Auslaßachse, im Vergleich zu der Baulänge der Anordnung nach der US-A 57 96 011 wesentlich kürzer ist. Dies ist u.a. auf die V-Form des Meßrohrs zurückzuführen. Insgesamt ergibt sich daher ein Kompaktaufnehmer mit der gewünschten Meßgenauigkeit.

Ferner trägt die Konstruktion des Gehäuses, das im Wesentlichen aus einem Tragrahmen und einem Vorder- sowie einem Hinterblech besteht, dazu bei, dass der Coriolis-Aufnehmer sehr kostengünstig hergestellt werden kann. Hierzu trägt ferner die für die Durchführung verwendete Leiterplatte bei, da sie eine einfache und billige elektrische Verbindung zwischen der Erregeranordnung und den Sensoren einerseits sowie einer Auswerte-Elektronik ermöglicht.

Die Erfindung wird nun anhand der Figuren der Zeichnung näher erläutert, in der ein bevorzugtes Ausführungsbeispiel dargestellt ist. Funktionsgleiche Teile sind in den einzelnen Figuren mit denselben Bezugszeichen versehen, jedoch in nachfolgenden Figuren nur dann wiederholt, wenn es sinnvoll erscheint.
- Fig. 1: zeigt perspektivisch lediglich mechanische Einzelheiten eines Coriolis-Aufnehmers ohne vervollständigtes Gehäuse,
- Fig. 2: zeigt eine Vorderansicht des Coriolis-Aufnehmers entsprechend Fig. 1, wieder ohne vervollständigtes Gehäuse, jedoch mit zusätzlichen elektrischen Einzelheiten,
- Fig. 3: zeigt im Schnitt entlang der Linie A-A von Fig. 2 eine Unteransicht von Fig. 2, nun jedoch mit vervollständigtem Gehäuse, und
- Fig. 4: zeigt im Schnitt entlang der Linie B-B von Fig. 2 eine Seitenansicht von Fig. 2, wieder mit vervollständigtem Gehäuse.

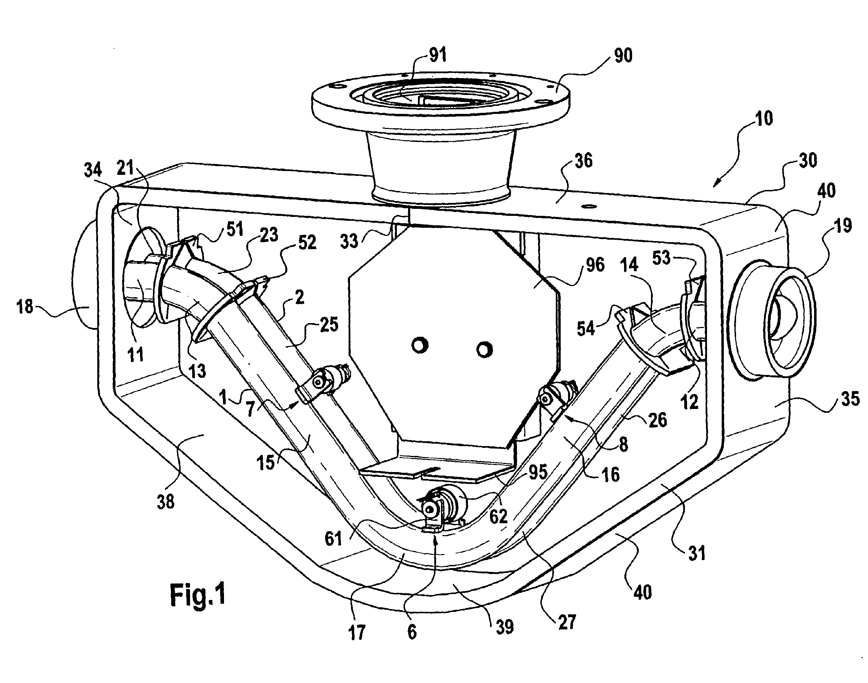

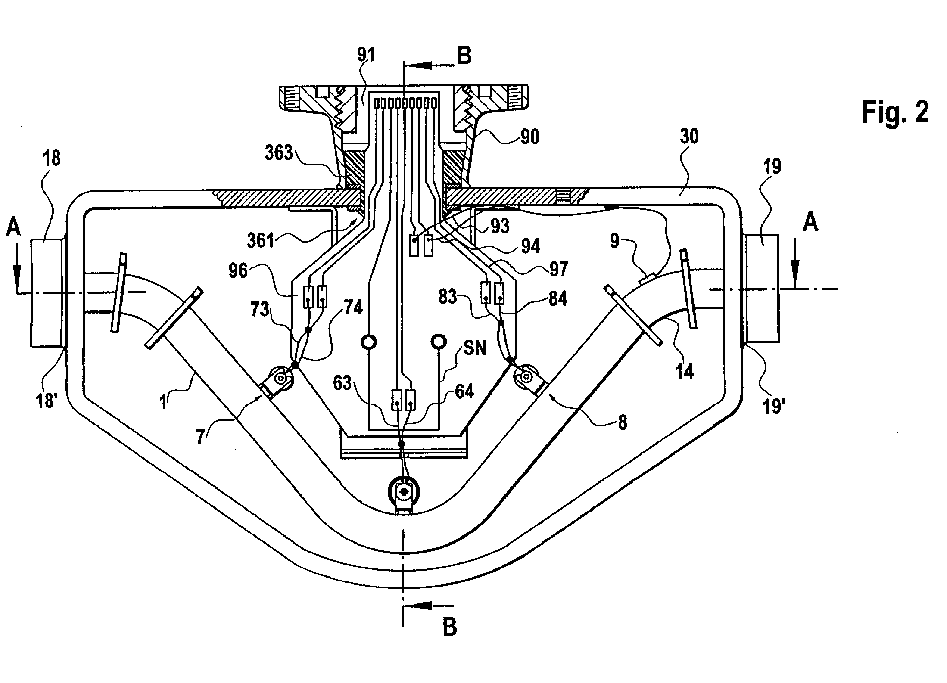

In Fig. 1 sind perspektivisch lediglich mechanische Einzelheiten eines Coriolis-Massedurchfluß/Dichte/Viskositäts-Aufnehmers, der weiterhin kurz als Coriolis-Aufnehmer 10 bezeichnet ist, dargestellt, aus Gründen der besseren Sichtbarkeit seines inneren Aufbaus allerdings ohne vervollständigtes Gehäuse, und Fig. 2 zeigt eine entsprechende Vorderansicht mit zusätzlichen elektrischen Einzelheiten.

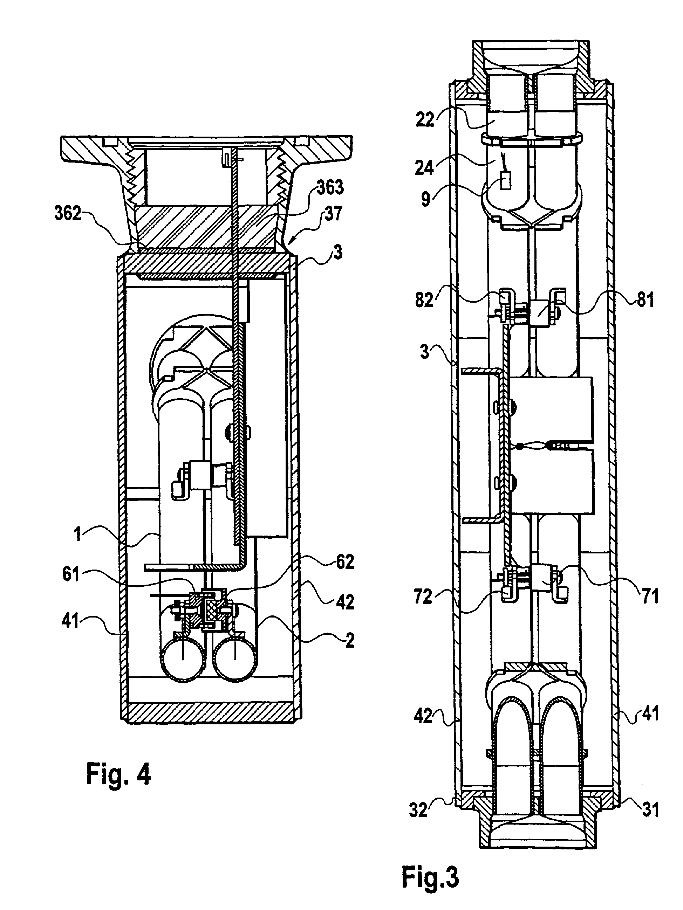

Demgegenüber zeigen die Fig. 3 und 4 der Fig. 2 zugeordnete Schnittansichten mit jeweils vervollständigtem Gehäuse. Wegen der gewählten Darstellung in Form einer perspektivischen Fig. 1 zusammen mit Auf-, Grund- und Seitenriss handelt die folgende Erläuterung nicht Figur für Figur hintereinander ab, sondern es werden die Figuren gemeinsam erörtert.

Der Coriolis-Aufnehmer 10 weist ein in einer ersten Ebene V-förmig gebogenes erstes Meßrohr 1 auf, das bezüglich einer ersten Symmetrielinie symmetrisch gebogen ist. Ein V-förmig gebogenes zweites Meßrohr 2 ist in einer zweiten Ebene bezüglich einer zweiten Symmetrielinie symmetrisch gebogen. Die Meßrohre 1, 2 sind parallel zu einander angeordnet und jeweils einstückig ausgebildet.

Das Meßrohr 1 hat ein gerades Einlaßstück 11 mit einer in der ersten Ebene liegenden Einlaßachse, ein gerades Auslaßstück 12 mit einer in der ersten Ebene liegenden und mit der Einlaßachse fluchtenden Auslaßachse; somit ergibt sich eine gemeinsame Achse, die im Folgenden als Einlaß/Auslaßachse bezeichnet ist.

Das Meßrohr 2 hat ein gerades Einlaßstück 12 mit einer in der zweiten Ebene liegenden Einlaßachse, ein gerades Auslaßstück 22 (nur in Fig. 3 zu sehen) mit einer in der ersten Ebene liegenden und mit der Einlaßachse fluchtenden Auslaßachse; auch diese gemeinsame Achse ist im Folgenden als Einlaß/Auslaßachse bezeichnet.

Das Meßrohr 1 hat ferner einen mit dem Einlaßstück 11 verbundenen Einlaßbogen 13, einen mit dem Auslaßstück 12 verbundenen Auslaßbogen 14, ein mit dem Einlaßbogen 13 verbundenes erstes gerades Rohrstück 15, ein mit dem Auslaßbogen 14 verbundenes zweites gerades Rohrstück 16 und einen mit den Rohrstücken 15, 16 verbundenen Scheitelbogen 17.

Das Meßrohr 2 hat ferner einen mit dem Einlaßstück 21 verbundenen Einlaßbogen 23 (nur in Fig. 3 zu sehen), einen mit dem Auslaßstück 22 verbundenen Auslaßbogen 24 (nur in Fig. 3 zu sehen), ein mit dem Einlaßbogen 23 verbundenes erstes gerades Rohrstück 25, ein mit dem Auslaßbogen 24 verbundenes zweites gerades Rohrstück 26 und einen mit den Rohrstücken 25, 26 verbundenen Scheitelbogen 27. Im Ausführungsbeispiel entspricht die Biegung der Achse des Scheitelbogens 17 und die des Scheitelbogens 27 praktisch einem Kreisbogen.

Die Einlaßstücke 11, 21 sind in einem Einlaß-Verteilerstück 18 und die Auslaßstücke 12, 22 sind in einem Auslaß-Verteilerstück 19 fixiert. Diese Verteilerstücke 18, 19 sind von einem Tragrahmen 30 gehaltert, der Teil eines Gehäuses 3 (nur in Fig. 3 zu sehen) ist.

Die Meßrohre 1, 2 sowie die Verteilerstücke 18, 19 bestehen im Ausführungsbeispiel aus rostfreiem Stahl, wobei bevorzugt für die Meßrohre 1, 2 der rostfreie Stahl mit der europäischen Werkstoffnummer 1.4539, die der amerikanischen Bezeichnung 904 L entspricht, und für die Verteilerstücke 18, 19 der rostfreie Stahl mit der europäischen Werkstoffnummer 1.4404, die der amerikanischen Bezeichnung 316 L entspricht, verwendet wird.

Der Coriolis-Aufnehmer 10 ist in eine von einem zu messenden Fluid mindestens temporär durchströmte Rohrleitung einzusetzen. Hierzu werden entsprechend den Wünschen des Käufers des Coriolis-Aufnehmers 10 herstellerseitig an das Einlaß- und das Auslaß-Verteilerstück 18, 19 Verbindungsvorrichtungen angebracht, wie z.B. Stutzen mit einem Außen- oder mit einem Innengewinde, Flansche oder Klemmvorrichtungen, wie sie z.B. unter der eingetragenen Marke Triclamp handelsüblich sind.

Ebenso wie die Meßrohre 1, 2 ist der Tragrahmen 30 einstückig ausgebildet und aus einem eine Vorderfläche 31 und eine Hinterfläche 32 (nur in Fig. 3 zu sehen) aufweisenden Flach-Edelstahl von konstanter Breite und Dicke durch entsprechendes Biegen und Verschweißen der Enden, vgl. die Naht 33, hergestellt worden.

Der Tragrahmen 30 umfasst ein ebenes Einlaß-Rahmenstück 34, in dem das Einlaß-Verteilerstück 18 verschweißt ist, und ein ebenes Auslaß-Rahmenstück 35, in dem das Auslaß-Verteilerstück 19 verschweißt ist, vgl. in Fig. 2 die über den Tragrahmen 30 vorstehenden Teile der Verteilerstücke 18, 19 mit jeweils zugehöriger Schweißnaht 18', 19'.

Der Tragrahmen 30 umfasst ferner ein das Einlaß- und das Auslaß-Rahmenstück 18, 19 verbindendes, ebenes Durchführungs-Rahmenstück 36, in dem eine elektrische Durchführung 37 (nur in Fig. 4 zu sehen) druckdicht fixiert ist. Das Durchführungs-Rahmenstück 36 bildet mit dem Einlaß- und dem Auslaß-Rahmenstück 18, 19 jeweils einen rechten Winkel.

Der Tragrahmen 30 umfasst ferner ein an das Einlaß-Rahmenstück 34 unter einem Winkel angesetztes, ebenes erstes Ansatz-Rahmenstück 38, der größer als 90° ist - im Ausführungsbeispiel sind das etwa 120°. Der Tragrahmen 30 umfasst schließlich ein ein in das Ansatz-Rahmenstück 38 übergehendes, gebogenes Scheitel-Rahmenstück 39 und ein an das Auslaß-Rahmenstück 35 unter dem genannten Winkel angesetztes, in das Scheitel-Rahmenstück 39 übergehendes, ebenes zweites Ansatzstück 40.

Der Tragrahmen 30 ist durch ein auf die Vorderfläche 31 geschweißtes, bevorzugt ebenes, Vorderblech 41 aus rostfreiem Stahl und ein auf die Hinterfläche 32 geschweißtes, bevorzugt ebenes, Hinterblech 42 aus demselben Stahl zum Gehäuse 3 ergänzt, so dass es druckdicht ist. Vorder- und Hinterblech 41, 42 sind nur in den Fig. 3 und 4 zu sehen. Als Stahl für das Gehäuse 3 wird im Ausführungsbeispiel bevorzugt der rostfreie Stahl mit der europäischen Werkstoffnummer 1.4301 verwendet, die der amerikanischen Bezeichnung 304 entspricht.

Die bevorzugt ebenen Vorder- und Hinterbleche 41, 42 ergeben eine höhere Steifheit des Gehäuses 3 gegenüber bei einer Druckbeanspruchung in Richtung der Einlaß/Auslaßachse, als wenn diese Bleche mit Längssicken versehen würden.

Die Meßrohre 1, 2 sind mittels einer ersten Knotenplatte 51 in der Nähe einer Stelle starr miteinander verbunden, an der das jeweilige Einlaßstück 11, 21 in den jeweiligen Einlaßbogen 13, 23 übergeht, und mittels einer zweiten Knotenplatte 52 in der Nähe einer Stelle starr miteinander verbunden, an der der jeweilige Einlaßbogen 13, 23 in das jeweilige erste Rohrstück 15, 25 übergeht.

Die Meßrohre 1, 2 sind ferner mittels einer dritten Knotenplatte 53 in der Nähe einer Stelle starr miteinander verbunden, an der das jeweilige Auslaßstück 12, 22 in den jeweiligen Auslaßbogen 14, 24 übergeht, und mittels einer vierten Knotenplatte 54 in der Nähe einer Stelle starr miteinander verbunden, an der der jeweilige Auslaßbogen 14, 24 in das jeweilige zweite Rohrstück 16, 26 übergeht.

Die vier Knotenplatten 51, 52, 53, 54 sind bevorzugt dünne Scheiben aus z.B. rostfreien Stahl, insb. wie er für das Gehäuse 3 verwendet wird. Diese Scheiben sind mit Bohrungen, deren Außen-Durchmesser dem der Meßrohre 1, 2 entspricht, und mit Schlitzen versehen, so dass die Scheiben zunächst auf die Meßrohre 1, 2 aufgeklemmt und danach mit ihnen hartverlötet werden können; dabei werden auch die Schlitze miteinander hartverlötet, so dass die Scheiben ungeschlitzt als Knotenplatten auf den Meßrohren 1, 2 sitzen.

Eine Erregeranordnung 6 versetzt die Meßrohre 1, 2 im Betrieb in stimmgabel-artige Schwingungen, die wie üblich eine Schwingfrequenz haben, die gleich der mechanischen Resonanzfrequenz des von den Meßrohren 1, 2 gebildeten Schwingsystems ist oder die in der Nähe dieser Resonanzfrequenz liegt. Diese Schwingfrequenz ist im Betrieb bekanntlich von der Dichte des die Meßrohre 1, 2 durchströmenden Fluids abhängig. Daher kann aufgrund der Schwingfrequenz die Dichte des Fluids ermittelt werden.

Ein erster Teil 61 der Erregeranordnung 6 ist am Scheitelbogen 17 des Meßrohrs 1 im Bereich von dessen oben erwähnter Symmetrielinie und ein zweiter Teil 62 der Erregeranordnung 6 am Scheitelbogen 27 des Meßrohrs 2 im Bereich von dessen oben erwähnter Symmetrielinie fixiert, vgl. Fig. 4.

Im Ausführungsbeispiel der Figuren ist die Erregeranordnung 6 eine elektrodynamische Erregeranordnung und somit der Teil 61 eine Spulen-Anordnung und der Teil 62 eine Dauermagnet-Anordnung, die mit der Spulen-Anordnung durch Eintauchen zusammenwirken kann.

Die Erregeranordnung 6 wird von einer nicht dargestellten Treiberschaltung mit Wechselenergie versorgt, die z.B. eine immer die momentane Resonanzfrequenz des Schwingsystems der Meßrohre 1, 2 einstellende PLL-Schaltung entsprechend der US-A 48 01 897 sein kann.

Ein erster Geschwindigkeits- oder Wegsensor 7 und ein zweiter Geschwindigkeits- oder Wegsensor 8, die symmetrisch bezüglich der genannten Symmetrielinien der Meßrohre 1, 2 daran fixiert sind, erzeugen Meßsignale, mittels denen der Massedurchfluß, die Dichte und, falls gewünscht, die Viskosität des Fluids auf übliche Art und Weise ermittelt werden können; dies liegt jedoch außerhalb des Rahmens der Erfindung.

Ein erster Teil 71 des Geschwindigkeits- oder Wegsensors 7 ist am Rohrstück 15 des Meßrohrs 1 und ein zweiter Teil 72 am Rohrstück 25 des Meßrohrs 1 fixiert, vgl. Fig. 3. Ein erster Teil 81 des Geschwindigkeits- oder Wegsensors 8 ist am Rohrstück 16 des Meßrohrs 2 und ein zweiter Teil 82 am Rohrstück 26 des Meßrohrs 2 fixiert, vgl. Fig. 3.

Die Geschwindigkeits- oder Wegsensoren 7, 8 sind im Ausführungsbeispiel der Figuren bevorzugt elektrodynamische Geschwindigkeitssensoren; somit sind die Teile 71, 81 jeweils eine Spulen-Anordnung und die Teile 72, 82 jeweils eine Dauermagnet-Anordnung, die in die zugehörige Spulen-Anordnung eintauchen kann.

Wie oben bereits kurz erwähnt wurde, ist in den Tragrahmen 30 gegenüber den Scheitelbögen 17, 27 und somit auch gegenüber dem Scheitel-Rahmenstück 39 die mehrere elektrische Leiter aufweisende Durchführung 37 befestigt, insb. druckdicht eingesetzt. Hierzu ist am Tragrahmen 30 ein Flansch 90 befestigt; bevorzugt ist der Flansch 90 mit dem Tragrahmen 30 verschweißt. Der Flansch 90 hat eine Bohrung 91, so dass die Durchführung 37 von außerhalb des Gehäuses 3 zugänglich ist.

Die Durchführung 37 umfasst eine am Tragrahmen 30 mittels einer abgewinkelten Tragplatte 95 befestigte und zwischen diesem sowie den Scheitelbögen auf diese zulaufenden Leiterplatte 96 auf. Darauf sind Leitbahnen angeordnet, vgl. die Leitbahn 97, die nur in Fig. 2 zu sehen sind.

An jeweils eine dieser Leitbahnen sind Anschluß-Leitungen 63, 64 der Erregeranordnung 6, Anschluß-Leitungen 73, 74 des Geschwindigkeitssensors 7, Anschluß-Leitungen 83, 84 des Geschwindigkeitssensors 8 und Anschluß-Leitungen 93, 94 eines Temperatursensors 9 und somit auch an die einzelnen Leiter der Durchführung 37 angeschlossen. Die Anschluß-Leitungen 63, 64, 73, 74, 83, 84, 93, 94 sind nur in Fig. 2 zu sehen. Zusätzlich ist auch eine Leitbahn SN für einen Schaltungsnullpunkt vorgesehen, die über metallische, mit ihr mechanisch und daher auch elektrisch verbundene Befestigungsmittel an der metallischen Tragplatte 95 fixiert ist.

Der Temperatursensor 9 (nur in Fig. 2 und 3 zu sehen) ist im Ausführungsbeispiel auf dem Auslaßbogen 14 des Meßrohrs 1, z.B. durch Kleben, befestigt und ist bevorzugt ein Platin-Widerstand. Er dient, wie eingangs erwähnt, zum Messen der momentanen Temperatur des Fluids. Der Temperatursensor 9 kann auch an jeder geeigneten anderen Stelle der Meßrohre 1, 2 angeordnet werden.

Die Durchführung 37 umfasst ferner einen im Durchführungs-Rahmenstück 36 angebrachten Schlitz 361, durch die Leiterplatte 96 gesteckt ist und die sich in den Flansch 90 hinein erstreckt, wobei zwischen Leiterplatte 96 und Schlitz 361 ein zu deren elektrischer Isolierung ausreichender Abstand eingehalten ist.

Ferner ist die Leiterplatte 96 durch eine auf dem Durchführung-Rahmenstück 36 bohrungsseitig aufliegende Scheibe 362 aus einem Isoliermaterial hindurch gesteckt. Eine isolierende Vergussmasse 363 füllt einen oberhalb der Scheibe 362 liegenden Teil der Bohrung 91 vollständig aus, wobei die Vergussmasse 363 auch mehr oder weniger in den Raum zwischen der Leiterplatte 96 und der Innenwand des Schlitzes 361 eingedrungen sein kann.

Die Dicke der Vergussmasse 363 in Richtung auf das offene Ende der Bohrung 91 ist mindestens gleich der Länge der für die Zündschutzart Ex-d nach den europäischen Standards EN 50 014 und EN 50 018 in Abhängigkeit von der Spaltbreite vorgeschriebenen Spaltlänge. Diesen Standards entsprechen vergleichbare Standards anderer Länder.

Da der Coriolis-Aufnehmer 10 ja noch mit einer zugehörigen Betriebs- und Auswerte-Elektronik auszustatten ist, so dass ein funktionsfähiger Coriolis-Massedurchfluß/Dichte/Viskositätsmesser entsteht, werden mit dem Flansch 90 ein nicht dargestelltes Elektronik-Gehäuse für diese Betriebs- und Auswerte-Elektronik oder eine nicht dargestellte Anschluß-Anordnung für ein Kabel verschraubt, das zu einem entfernt vom Coriolis-Aufnehmer angeordneten Elektronik-Gehäuse für diese Betriebs- und Auswerte-Elektronik führt.

## Patentansprüche

1. Coriolis-Massedurchfluß/Dichte/Viskositäts-Aufnehmer (10), der in eine von einem Fluid mindestens temporär durchströmte Rohrleitung einzusetzen ist,
- mit einem in einer ersten Ebene V-förmig bezüglich einer ersten Symmetrielinie symmetrisch gebogenen ersten Meßrohr (1),
- mit einem in einer zweiten Ebene V-förmig bezüglich einer zweiten Symmetrielinie symmetrisch gebogenen zweiten Meßrohr (2),
-- welche Meßrohre parallel zu einander angeordnet sowie jeweils einstückig ausgebildet sind und
-- von welchen Meßrohren jedes
--- ein gerades Einlaßstück (11, 21) mit einer in der ersten bzw. zweiten Ebene liegenden Einlaßachse,
--- ein gerades Auslaßstück (12, 22) mit einer in der ersten bzw. zweiten Ebene liegenden und mit der Einlaßachse fluchtenden Auslaßachse,
--- einen mit dem Einlaßstück verbundenen Einlaßbogen (13, 23),
--- einen mit dem Auslaßstück verbundenen Auslaßbogen (14, 24),
--- ein mit dem Einlaßbogen verbundenes erstes gerades Rohrstück (15, 25),
--- ein mit dem Auslaßbogen verbundenes zweites gerades Rohrstück (16, 26) und
--- einen mit den Rohrstücken verbundenen Scheitelbogen (17, 27) aufweist,
---- welche Einlaßstücke (11, 21) in einem Einlaß-Verteilerstück (18) fixiert sind,
---- welche Auslaßstücke (12, 22) in einem Auslaß-Verteilerstück (19) fixiert sind und
---- welche Verteilerstücke (18, 19) von einem Tragrahmen (30) gehaltert sind, der Teil eines Gehäuses (3) ist,
- mit einer Erregeranordnung (6),
-- die die Meßrohre (1, 2) im Betrieb in stimmgabel-artige Schwingungen versetzt,
-- von der ein erster Teil (61) am Scheitelbogen (17) des ersten Meßrohrs (1) im Bereich von dessen Symmetrielinie fixiert ist und
-- von der ein zweiter Teil (62) am Scheitelbogen (27) des zweiten Meßrohrs (2) im Bereich von dessen Symmetrielinie fixiert ist,
- mit einem ersten Geschwindigkeits- oder Wegsensor (7),
-- von dem ein erster Teil (71) am ersten Rohrstück (15) des ersten Meßrohrs (1) und ein zweiter Teil (72) am ersten Rohrstück (25) des zweiten Meßrohrs (2) fixiert ist,
- mit einem symmetrisch bezüglich der Symmetrielinien der Meßrohre (1, 2) angeordneten zweiten Geschwindigkeits- oder Wegsensor (8),
-- von dem ein erster Teil (81) am zweiten Rohrstück (16) des ersten Meßrohrs (1) und ein zweiter Teil (82) am zweiten Rohrstück (26) des zweiten Meßrohrs (2) fixiert ist,
- mit einer in den Tragrahmen (30) gegenüber den Scheitelbögen (17, 27) eingesetzten, mehrere elektrische Leiter aufweisenden Durchführung (37) und
- mit einer am Tragrahmen befestigten und zwischen diesem sowie den Scheitelbögen verlaufenden Leiterplatte (96) mit Leitbahnen (97),
-- an denen Anschluß-Leitungen (63, 64, 73, 74, 83, 84) der Erregeranordnung (6) und der Geschwindigkeits- oder Wegsensoren (7, 8) angeschlossen sind.

2. Coriolis-Massedurchfluß/Dichte/Viskositäts-Aufnehmer nach Anspruch 1, bei dem die Meßrohre (1, 2)
- mittels einer ersten Knotenplatte (51) in der Nähe einer Stelle starr miteinander verbunden sind,
-- an der das jeweilige Einlaßstück (11, 21) in den jeweiligen Einlaßbogen (13, 23) übergeht,
- mittels einer zweiten Knotenplatte (52) in der Nähe einer Stelle starr miteinander verbunden sind,
-- an der der jeweilige Einlaßbogen (13, 23) in das jeweilige erste Rohrstück (15, 25) übergeht,
- mittels einer dritten Knotenplatte (53) in der Nähe einer Stelle starr miteinander verbunden sind,
-- an der das jeweilige Auslaßstück (12, 22) in den jeweiligen Auslaßbogen (14, 24) übergeht, und
- mittels einer vierten Knotenplatte (54) in der Nähe einer Stelle starr miteinander verbunden sind,
-- an der der jeweilige Auslaßbogen (14, 24) in das jeweilige zweite Rohrstück (16, 26) übergeht.

3. Coriolis-Massedurchfluß/Dichte/Viskositäts-Aufnehmer nach Anspruch 1 oder 2, bei dem elektrodynamische Geschwindigkeitssensoren verwendet sind und die Erregeranordnung (6) vom elektrodynamischen Typ ist.

4. Coriolis-Massedurchfluß/Dichte/Viskositäts-Aufnehmer nach einem der Ansprüche 1 bis 3, bei dem
- der Tragrahmen (30) einstückig aus einem eine Vorderfläche (31) und eine Hinterfläche (32) aufweisenden rostfreien Stahlblech von konstanter Breite und Dicke besteht und umfaßt:
-- ein ebenes Einlaß-Rahmenstück (34), in dem das Einlaß-Verteilerstück (18) verschweißt ist,
-- ein ebenes Auslaß-Rahmenstück (35), in dem das Auslaß-Verteilerstück (19) verschweißt ist,
-- ein Einlaß- und Auslaß-Rahmenstück (34, 35) verbindendes, ebenes Durchführungs-Rahmenstück (36), in dem die Durchführung (37) druckdicht fixiert ist,
-- ein an das Einlaß-Rahmenstück (34) unter einem Winkel angesetztes, ebenes erstes Ansatz-Rahmenstück (38), der größer als 90° ist,
-- ein in das erste Ansatz-Rahmenstück (38) übergehendes, gebogenes Scheitel-Rahmenstück (39) und
-- ein an das Auslaß-Rahmenstück (35) unter dem Winkel angesetztes, in das Scheitel-Rahmenstück (39) übergehendes, ebenes zweites Ansatzstück (40), und
- der Tragrahmen (30) durch ein auf die Vorderfläche (31) geschweißtes ebenes Vorderblech (41) aus rostfreiem Stahl und ein auf die Hinterfläche (32) geschweißtes ebenes Hinterblech (42) aus demselben Stahl zum Gehäuse (3) ergänzt ist.

5. Coriolis-Massedurchfluß/Dichte/Viskositäts-Aufnehmer nach einem der Ansprüche 1 bis 4, bei dem die Durchführung (37) umfasst:
- einen am Tragrahmen (30) befestigten, eine Bohrung (91) aufweisenden Flansch (90),
- die Leiterplatte (96), die durch einen im Durchführungs-Rahmenstück (36) angebrachten Schlitz (361) gesteckt ist und sich in den Flansch hinein erstreckt, wobei zwischen Leiterplatte und Schlitz ein zur elektrischen Isolierung ausreichender Abstand eingehalten ist,
- eine auf dem Durchführung-Rahmenstück bohrungsseitig aufliegende Scheibe (362) aus einem Isoliermaterial, durch die Leiterplatte (96) gesteckt ist, und
- eine einen oberhalb der Scheibe liegenden Teil der Bohrung ausfüllende isolierende Vergussmasse (363), von der eine Dicke mindestens gleich der Länge der für die Zündschutzart Ex-d vorgeschriebenen Spaltlänge in Abhängigkeit von der Spaltbreite ist.

## Claims

1. A Coriolis mass flow/density/viscosity meter (10) for insertion into a pipeline through which a fluid flows at least intermittently,
- with a first measuring tube (1) which is bent into the shape of a V in a first plane and is symmetrical in relation to a first line of symmetry,
- with a second measuring tube (2) which is bent into the shape of a V in a second plane and is symmetrical in relation to a second line of symmetry,
-- which measuring tubes are arranged parallel to one another and are each formed in one piece and
-- each of which measuring tubes has
--- a straight inlet piece (11, 21) with an inlet axis lying in the first or second plane,
--- a straight outlet piece (12, 22) with an outlet axis lying in the first or second plane and aligned with the inlet axis,
--- an inlet bend (13, 23) connected to the inlet piece,
--- an outlet bend (14, 24) connected to the outlet piece,
--- a first straight tube portion (15, 25) connected to the inlet bend,
--- a second straight tube portion (16, 26) connected to the outlet bend and
--- a vertex bend (17, 27) connected to said tube portions,
---- which inlet pieces (11, 21) are fixed in an inlet manifold (18),
---- which outlet pieces (12, 22) are fixed in an outlet manifold (19) and
---- which manifolds (18, 19) are held by a supporting frame (30) which is part of a housing (3),
- with an exciter arrangement (6)
-- which sets the measuring tubes (1, 2) into tuning-fork-type vibrations during operation,
-- of which a first part (61) is fixed to the vertex bend (17) of the first measuring tube (1) in the region of the line of symmetry thereof and
-- of which a second part (62) is fixed to the vertex bend (27) of the second measuring tube (2) in the region of the line of symmetry thereof,
- with a first velocity or displacement sensor (7),
-- of which a first part (71) is fixed to the first tube portion (15) of the first measuring tube (1) and a second part (72) is fixed to the first tube portion (25) of the second measuring tube (2),
- with a second velocity or displacement sensor (8) arranged symmetrically in relation to the lines of symmetry of the measuring tubes (1, 2),
-- of which a first part (81) is fixed to the second tube portion (16) of the first measuring tube (1) and a second part (82) is fixed to the second tube portion (26) of the second measuring tube (2),
- with a bushing (37) which is inserted into the supporting frame (30) opposite the vertex bends (17, 27) and is provided with a plurality of electrical conductors and
- with a printed circuit board (96) fixed to the supporting frame and extending between the latter and the vertex bends and provided with conductive tracks (97)
-- to which connecting lines (63, 64, 73, 74, 83, 84) of the exciter arrangement (6) and the velocity or displacement sensors (7, 8) are connected.

2. A Coriolis mass flow/density/viscosity meter according to claim 1, in which the measuring tubes (1, 2)
- are rigidly connected to one another by means of a first junction plate (51) in the vicinity of a point
-- at which the respective inlet piece (11, 21) merges into the respective inlet bend (13, 23),
- are rigidly connected to one another by means of a second junction plate (52) in the vicinity of a point
-- at which the respective inlet bend (13, 23) merges into the respective first tube portion (15, 25),
- are rigidly connected to one another by means of a third junction plate (53) in the vicinity of a point
-- at which the respective outlet piece (12, 22) merges into the respective outlet bend (14, 24), and
- are rigidly connected to one another by means of a fourth junction plate (54) in the vicinity of a point
-- at which the respective outlet bend (14, 24) merges into the respective second tube portion (16, 26).

3. A Coriolis mass flow/density/viscosity meter according to claim 1 or 2, in which electrodynamic velocity sensors are used and the exciter arrangement (6) is of the electrodynamic type.

4. A Coriolis mass flow/density/viscosity meter according to any one of claims 1 to 3, in which
- the supporting frame (30) is formed in one piece from a stainless steel sheet, which has a front surface (31) and a rear surface (32) and a constant width and thickness, and comprises:
-- a flat inlet frame piece (34), into which the inlet manifold (18) is welded,
-- a flat outlet frame piece (35), into which the outlet manifold (19) is welded,
-- a flat bushing frame piece (36) which connects the inlet and the outlet frame piece (34, 35) and in which the bushing (37) is fixed in a pressure-tight manner,
-- a first flat connecting frame piece (38) which is connected to the inlet frame piece (34) at an angle greater than 90°,
-- a curved vertex frame piece (39) merging into the first connecting frame piece (38) and
-- a second flat connecting piece (40) which is connected to the outlet frame piece (35) at said angle and merges into the vertex frame piece (39), and
- the supporting frame (30) is supplemented by a flat front plate (41) made of stainless steel and welded onto the front surface (31) and a flat rear plate (42) made of the same steel and welded onto the rear surface (32) to form the housing (3).

5. A Coriolis mass flow/density/viscosity meter according to any one of claims 1 to 4, in which the bushing (37) comprises:
- a flange (90) fixed to the supporting frame (30) and provided with a bore (91),
- the printed circuit board (96), which is inserted through a slot (361) formed in the bushing frame piece (36) and extends into the flange, wherein clearance sufficient for electrical insulation is maintained between the printed circuit board and the slot,
- a disc (362) which is made of an insulating material and lies on the bushing frame piece on the side on which the bore is located, and through which the printed circuit board (96) is inserted, and
- an insulating sealing compound (363) which fills a part of the bore lying above the disc and a thickness of which is at least equal to the length of the gap length prescribed for protection type Ex-d as a function of the gap width.

## Revendications

1. Capteur de débit massique Coriolis/densité/viscosité (10), qui doit être placé dans une conduite, dans laquelle circule au moins temporairement un fluide,
- avec un premier tube de mesurage (1) coudé de façon symétrique en forme de V dans un premier plan, par rapport à une première ligne de symétrie,
- avec un deuxième tube de mesurage (1) coudé de façon symétrique en forme de V dans un deuxième plan, par rapport à une deuxième ligne de symétrie,
-- lesquels tubes de mesurage sont disposés parallèlement l'un par rapport l'autre et sont chacun constitués d'une seule pièce et
-- parmi lesquels tubes de mesurage chacun présente
-- une section d'entrée droite (11, 21) avec un axe d'entrée situé dans le premier ou le deuxième plan,
--- une section de sortie droite (12, 22) avec un axe de sortie, aligné avec l'axe d'entrée, situé dans le premier ou le deuxième plan,
--- un coude d'entrée (13, 23) relié avec la section d'entrée,
--- un coude de sortie (14, 24) relié avec la section de sortie,
--- un premier tube droit (15, 25) relié avec le coude d'entrée,
--- un deuxième tube droit (16, 26) relié avec le coude de sortie et
--- un coude (17, 27) relié avec les tubes,
--- lesquelles sections d'entrée (11, 21) sont fixées dans un collecteur d'entrée (18),
---- lesquelles sections de sortie (12, 22) sont fixées dans un collecteur de sortie (19) et
---- lesquels collecteurs (18, 19) sont supportés par un cadre porteur (30), qui fait partie intégrante d'un boîtier (3)
- avec un circuit d'excitation (6),
-- qui, en fonctionnement, fait entrer les tubes de mesurage (1, 2) en vibrations à la manière d'un diapason,
-- dont une première partie (61) est fixée sur le coude (17) du premier tube de mesurage (1), dans la zone de sa ligne de symétrie et
-- dont une deuxième partie (62) est fixée sur le coude (27) du deuxième tube de mesurage (2), dans la zone de sa ligne de symétrie,
- avec un premier capteur de vitesse ou de déplacement (7),
-- dont une première partie (71) est fixée sur le premier tube (15) du premier tube de mesurage (1) et une deuxième partie (72) sur le premier tube (25) du deuxième tube de mesurage (2),
- avec un deuxième capteur de vitesse ou de déplacement (8) disposé de façon symétrique aux lignes de symétrie des tubes de mesurage (1, 2),
-- dont une première partie (81) est fixée sur le deuxième tube (16) du premier tube de mesurage (1) et une deuxième partie (82) sur le deuxième tube (26) du deuxième tube de mesurage (2),
- avec une traversée (37) comportant plusieurs conducteurs électriques, intégrée dans le cadre porteur (30) en face du coude (17 , 27) et
- avec un circuit imprimé (96) doté de pistes (97), fixé au cadre porteur et disposé entre ce dernier et le coude,
-- auxquels conducteurs de raccordement (63, 64, 73, 74, 83, 84) sont raccordés le circuit d'excitation (6) et les capteurs de vitesse ou de déplacement (7, 8).

2. Capteur de débit massique Coriolis/densité/viscosité selon la revendication 1, pour lequel les tubes de mesurage (1, 2)
- sont reliés entre eux de façon rigide au moyen d'une première plaque (51) à proximité d'un endroit,
- au niveau duquel la section d'entrée (11, 21) respective rejoint le coude d'entrée (13, 23) correspondant,
- sont reliés entre eux de façon rigide au moyen d'une deuxième plaque (52) à proximité d'un endroit,
-- au niveau duquel le coude d'entrée (13, 23) respectif rejoint le premier tube (15, 25) correspondant,
- sont reliés entre eux de façon rigide au moyen d'une troisième plaque (53) à proximité d'un endroit,
-- au niveau duquel la section de sortie (12, 22) respective rejoint le coude de sortie (14, 24) correspondant et
- sont reliés entre eux de façon rigide au moyen d'une quatrième plaque (54) à proximité d'un endroit,
-- au niveau duquel le coude de sortie (14, 24) respectif rejoint le deuxième tube (16, 26) correspondant.

3. Capteur de débit massique Coriolis/densité/viscosité selon la revendication 1 ou 2, pour lequel des capteurs de vitesse électrodynamiques sont utilisés et le circuit d'excitation (6) et du type électrodynamique.

4. Capteur de débit massique Coriolis/densité/viscosité selon l'une des revendications 1 à 3, pour lequel
- le cadre porteur (30) est constitué d'une seule pièce, présentant une surface antérieure (31) et une surface postérieure (32) en tôle d'acier inoxydable de largeur et d'épaisseur constantes et comprenant :
-- un élément de cadre d'entrée (34) plan, dans lequel est soudé le collecteur d'entrée (18),
-- un élément de cadre de sortie (35) plan, dans lequel est soudé le collecteur de sortie (19),
-- un élément de cadre traversant (36), plan, reliant les éléments de cadre d'entrée et de sortie (34, 35) , dans lequel la traversée (37) est fixée de façon étanche,
-- un premier élément de cadre (38) plan, joint à l'élément de cadre d'entrée (34) selon un angle supérieur à 90°, - un élément de cadre (39) coudé, joint au premier élément de cadre (38) et
-- un deuxième élément de cadre (40) plan, joint d'un côté à l'élément de cadre de sortie (35) selon le même angle et, de l'autre côté, à l'élément de cadre (39), et
- le cadre porteur (30) est complété en un boîtier (3) par une tôle antérieure (41) plane en acier inoxydable, soudée à la surface antérieure (31) et une tôle postérieure (42) du même acier, soudée à la surface postérieure (32).

5. Capteur de débit massique Coriolis/densité/viscosité selon l'une des revendications 1 à 4, pour lequel la traversée (37) comprend :
- une bride (90) comportant un alésage (91), fixée sur le cadre porteur (30),
- le circuit imprimé (96), qui est introduit par la fente (361) réalisée dans l'élément de cadre traversant (36) et qui s'étend jusque dans la bride, une distance entre le circuit imprimé et la fente étant respectée pour l'isolation électrique,
- un disque (362) en matière isolante, reposant sur le côté alésage de l'élément de cadre traversant, à travers lequel est introduit le circuit imprimé (96), et
- une masse de remplissage (363) isolante, remplissant une partie de l'alésage, se trouvant au-dessus du disque, masse dont une épaisseur est au moins égale à la longueur de la hauteur de fente prescrite en fonction de la largeur de fente pour le mode de protection Ex-d.
